# EUROPÄISCHE PATENTSCHRIFT

(11) **EP 0 760 801 B1**
(45) Veröffentlichungstag und Bekanntmachung des Hinweises auf die Patenterteilung: **17.11.1999**
(21) Anmeldenummer: 95921818.1
(22) Anmeldetag: 02.06.1995
(51) Int. Cl.: B67C 3/34, B67D 5/02, F16J 15/06

(54) **VORRICHTUNG ZUM BEFÜLLEN ODER ENTLEEREN EINES FASSES MIT FLÜSSIGEN, PASTÖSEN ODER PULVERFÖRMIGEN MEDIEN, UND FASS ZUR VERWENDUNG DAFÜR.**
APPARATUS FOR FILLING OR EMPTYING A BARREL WITH LIQUID, PASTY OR POWDERY SUBSTANCES AND BARREL FOR USE THEREWITH
DISPOSITIF POUR REMPLIR OU VIDER UN FUT AVEC DES SUBSTANCES LIQUIDES, PATEUSES OU PULVERULANTES, ET FUT A UTILISER A CET EFFET.

(30) Priorität: 03.06.1994 DE 4419502
(43) Veröffentlichungstag der Anmeldung: 12.03.1997
(73) Patentinhaber: HELPMAN VERFAHRENSTECHNIK GMBH, 88239 Wangen (DE)
(72) Erfinder: BOLZ, Volker, D-88239 Wangen (DE); BOLZ, Jürgen, D-88239 Wangen (DE)
(74) Vertreter: Riebling, Peter, Dr.-Ing.
(86) Internationale Anmeldenummer: EP9502102
(87) Internationale Veröffentlichungsnummer: WO9533676

(56) Entgegenhaltungen:
- WO-A-93/23298
- DE-U- 9 212 623
- FR-A- 2 110 979
- FR-A- 2 685 050
- NL-A- 289 961

## Beschreibung

Gegenstand der Erfindung ist eine Vorrichtung zum Befüllen oder Entleeren eines Fasses mit flüssigen, pastösen oder pulverförmigen Medien, und Faß zur Verwendung dafür, nach dem jeweiligen Oberbegriff der unabhängigen Patentansprüche.

Ein Sicherheitsfüll und Sicherheitsentleerventil ist mit der auf den gleichen Anmelder zurückgehenden DE 92 12 623 U1 bekannt geworden.

Wegen der Funktion einer erfindungsgemäßen Vorrichtung wird auf die Offenbarung der genannten DE 92 12 623 U1 verwiesen.

Bei derartigen Ventilen geht es darum, ein Transfersystem als Teil eines Sicherheitssystems vorzuschlagen, bei dem es möglich ist, in der chemischen und pharmazeutischen Industrie betriebssicher Behälter zu füllen und/oder zu entleeren.

Bei der Entleerung oder Befüllung von Fässern hat es sich gezeigt, daß es bisher nicht ausreichend gelang zu vermeiden, daß Stoffe, z.B. Pulver, in die Umgebung gelangten.

Es kam also zu einem unerwünschten Austrag in die Umgebung. Die auf den gleichen Anmelder zurückgehende DE 92 12 623 U1 löst dieses Problem in besonderer Weise.

Es hat sich nun gezeigt, daß auch die Abdichtungsanordnung zwischen dem zu befüllenden Faß und der Befülleinrichtung selbst noch verbesserungsfähig ist.

Im Stand der Technik hat sich nämlich gezeigt, daß verwendete Ringdichtungen nur ungenügend befestigt sind und daher die Gefahr besteht, daß derartige Ringdichtungen sich verschieben, sich in ihrem Sitz lösen oder schnell verschleißen.

Der Erfindung liegt deshalb die Aufgabe zugrunde, eine Vorrichtung zum Befüllen oder Entleeren eines Fasses mit flüssigen, pastösen oder pulverförmigen Medien, und Faß zur Verwendung dafür derart weiterzubilden, daß eine verbesserte Abdichtung zwischen Faß und Befüllvorrichtung gegeben ist und eine hohe Lebensdauer der Anordnung erreicht wird.

Die Lösung der gestellten Aufgabe ergibt sich erfindungsgemäß durch die kennzeichnenden Merkmale der unabhängigen Patentansprüche 1 und 5.

Die erfindungsgemässe Vorrichtung zeichnet sich durch eine an der Unterseite des Schieberdeckels angeordnete Ringdichtung aus, welche ein etwa C-förmiges Profil aufweist und zwei zueinander in einem Winkel stehende Dichtflächen ausbildet, wobei die eine Dichtfläche im wesentlichen gerade ausgebildet ist und an der Oberseite des Faßdeckels anliegt, während die andere Dichtfläche im wesentlichen konisch ausgebildet ist und an einer zugeordneten konischen Fläche des Schiebergehäuses anliegt, wobei die Befestigung der Dichtung am Schieberdeckel über jeweils zwei Nuten und einen Ansatz erfolgt, und wobei der Anschlußflansch des Fasses eine der Ringdichtung entsprechende Ringdichtung aufweist, deren gerade Dichtfläche an der Unterseite des Schiebergehäuses anliegt, wobei sich die Ringdichtungen nur im Bereich einer umlaufenden Berührungslinie berühren.

Das zugehörige Faß umfasst eine am oberen Rand des Anschlußflansches angeordnete, im Profil etwa C-förmige Dichtung, die zwei zueinander in einem Winkel stehende Dichtflächen ausbildet, wobei die eine Dichtfläche im wesentlichen gerade ausgebildet ist und an der Unterseite eines einem Teil der Einrichtung bildenden Schiebergehäuses anlegbar ist, während die andere Dichtfläche im wesentlichen konisch ausgebildet ist und an einer entsprechenden konischen Fläche des Faßdeckels anliegt, wobei die Befestigung der Dichtung am Anschlußflansch über zwei Nuten und einen Ansatz erfolgt, und der Faßdeckel eine an der Innenseite des Anschlußflansches anliegende O-Ringdichtung aufweist.

Durch die C-förmige Ausbildung der jeweiligen Dichtung ergibt sich der wesentliche Vorteil, daß diese Dichtung aufgrund ihrer C-förmigen Ausbildung und aufgrund der Befestigung am jeweiligen Ort der Montage im Winkel zueinanderstehende Dichtflächen ausbildet. Durch die C-förmige Ausbildung ergeben sich somit zwei im Winkel zueinander stehende Dichtungsschenkel, die in zugeordnete Nuten am Ort der Befestigung eingreifen und dort sicher gehalten sind. Die Dichtung wird somit in ihrem Mittelteil durch einen etwa pfeilförmigen Ansatz unterstützt, der mit breiten, seitlichen Unterstützungsflächen die Gegenfläche zu den jeweils außen liegenden Dichtungsflächen der Dichtung bildet.

Damit besteht der Vorteil, daß die Dichtung jeweils verschiebungsgesichert mit großen Dichtungsflächen am jeweiligen Behälterteil befestigt ist.

In einer Weiterbildung der vorliegenden Erfindung ist es vorgesehen, daß die einander zugeordneten Dichtungen jeweils spiegelsymmetrisch gleich C-förmig ausgebildet sind.

Je kleiner nämlich die umlaufende Berührungslinie der Ringdichtungen ist, desto weniger besteht Gefahr, daß nach dem Trennen der beiden Systeme ein Stoff im Bereich dieser Berührungslinie liegen bleibt.

Es wird also angestrebt, diese Berührungslinie möglichst klein auszugestalten, um eine Ablagerung von Stoffen in diesem Bereich auf jeden Fall zu vermeiden.

Beide Dichtungen legen sich im Dichtungszustand des Systems so aneinander an, daß sich die beiden Dichtungen nur im Bereich der vorher erwähnten umlaufenden Berührungslinie berühren, die möglichst kleinflächig ausgebildet sein soll. Hierzu ist vorgesehen, daß die dem Schiebersystem zugeordnete Oberdichtung im Durchmesser kleiner ausgebildet ist, als vergleichsweise die darunterliegende größere Dichtung, die an der Innenseite des Anschlußflansches für das Faß angeordnet ist.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch die Oberseite eines Fasses mit einem Sicherungsdeckel;
- Figur 2:: das Faß nach Figur 1, bei entferntem Sicherungsdeckel und eingesetztem Faßdeckel, sowie aufgesetztem Schieberdeckel;
- Figur 3:: eine vergrößerte Detailansicht, durch die im Anschlußflansch des Fasses angeordnete Dichtung.

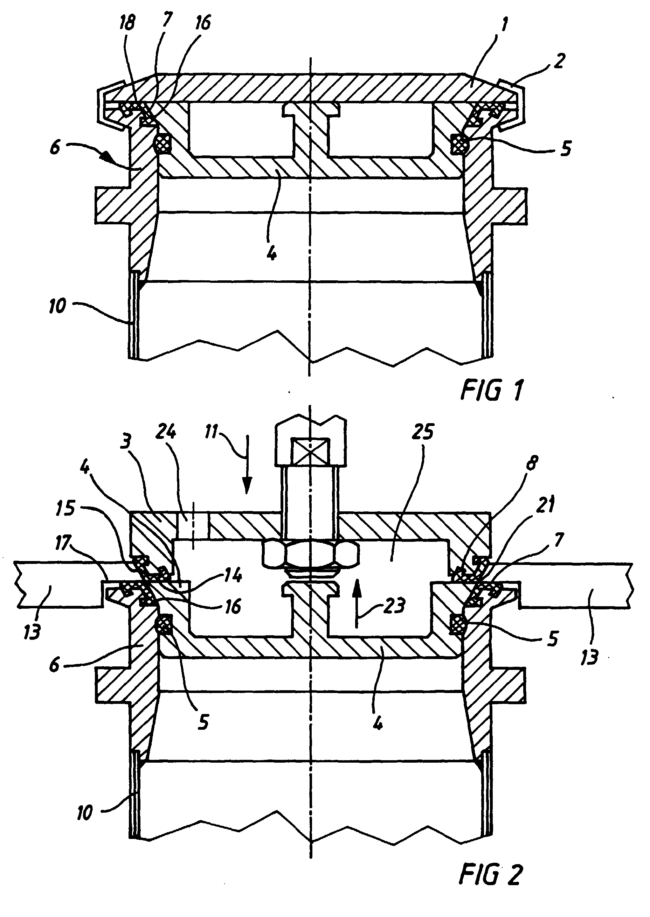

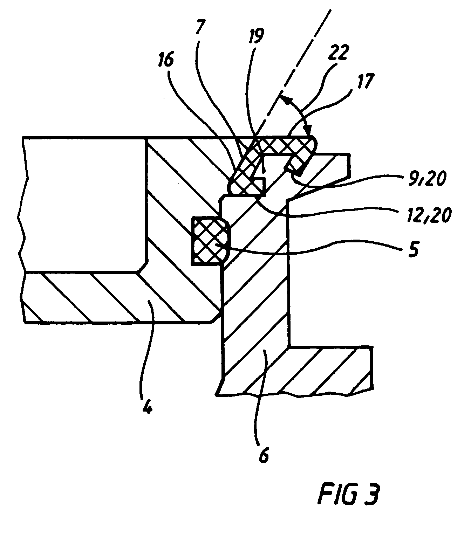

In Figur 1 ist dargestellt, daß an der Oberseite eines Fasses 10 ein Anschlußflansch 6 befestigt ist, in dessen oberem Teil eine erste Dichtung 7 angeordnet ist. Diese Dichtung 7 ist genauso wie die zweite Dichtung 8 befestigt, so daß auf die Erläuterungen in Figur 3 verwiesen werden kann.

Wichtig ist, daß die Dichtungen 7,8 etwa C-förmig im Profil ausgebildet sind und Zwei Dichtungsschenkeln 20 aufweisen, die in jeweils zugeordnete Nuten 9,12 formschlüssig eingreifen.

Die C-förmige Dichtung 7 bildet somit zwei im Winkel 22 zueinanderstehende Dichtungsflächen aus, die in Figur 1 als Dichtflächen 16 und 18 bezeichnet sind. In dieser Darstellung legt sich die obere und horizontal ausgerichtete Dichtfläche 18 an der Unterseite eines Sicherungsdeckels 1 an, der mit Hilfe eines Spannrings 2 auf dem Anschlußflansch 6 lösbar befestigt ist.

Das Faß 10 selbst wird hierbei durch einen Faßdeckel 4 verschlossen, der mit einer weiteren O-Ringdichtung 5 an der Innenseite des Anschlußflansches 6 abgedichtet ist.

Im oberen Teil des Anschlußflansches 6 ist hierbei die vorher erwähnte Dichtung 7 angeordnet, die sich mit einer konisch nach außen abgewinkelten Dichtfläche 16 an dem gleichfalls konisch ausgebildeten Faßdeckel 4 anlegt.

In einem bestimmten Verfahrenszustand wird der Faßdeckel 4 in Pfeilrichtung 23 nach oben abgehoben.

Gemaß Figur 2 wird über eine Bohrung 24 in einem Schieberdeckel 3 ein Vakuum in dem Raum 25 erzeugt, so daß der Faßdeckel 4 in Pfeilrichtung 23 an die Unterseite des Schieberdeckels 3 angesaugt und abgehoben wird.

Er kann so leicht aus dem Faß 10 entfernt werden.

In Figur 2 ist die Stellung gezeigt, in der das Faß 10 an der Unterseite des Befüllungsystems angedockt und dichtend mit diesem verbunden ist.

Wichtig hierbei ist, daß ein absoluter Dichtverbund zwischen der Unterseite des Schieberdeckels 3 und der Oberseite des Faßdeckels 4 erreicht wird. Hierzu dient die zweite Dichtung 8, die sich mit einer gleichfalls horizontal ausgebildeten Dichtfläche 14 an der Oberseite des Deckels 4 anlegt, während eine konisch hierzu abgewinkelte Dichtfläche 15 sich an einer gleichen Konusfläche eines Schiebergehäuses 13 anlegt.

Der Schieberdeckel 3 ist also dichtend in der Ausnehmung des Schiebergehäuses 13 aufgenommen, wobei dieser Dichtverbund durch die umlaufende Dichtung 8 erfolgt, während der Faßdeckel 4 dichtend in dem Anschlußflansch 6 über die Dichtung 7 aufgenommen ist.

Wichtig hierbei ist, daß sich die untere Dichtung 7 mit ihrer geraden Dichtfläche 17 an einer gleichfalls horizontal ausgebildeten Fläche des Schiebergehäuses 13 anlegt.

Auf diese Weise wird ein doppelter Dichtverbund gewährleistet.

Einerseits ist somit der Schieberdeckel 3 an der konischen Dichtfläche 15 am Schiebergehäuse 13 abgedichtet und andererseits mit seiner geraden Dichtfläche 14 auf der Oberseite des Faßdeckels 4, während in analoger Weise die Dichtung 7 mit ihrer Dichtfläche 17 sich an der geraden Dichtfläche des Schiebergehäuses 13 anlegt und sich mit einer konischen Dichtfläche 16 an dem konischen Außenumfang des Faßdeckels 4 anlegt.

Beide Dichtungen 7,8 wirken zusammen und zwar so, daß sie sich in der Schnittdarstellung nur im Bereich eines Berührpunktes 21 berühren, der als umlaufende Linie definiert ist.

In bestimmten Befüllungszuständen kommt es nämlich vor, daß von oben her Material in Pfeilrichtung 11 auf die Anordnung herabrieselt und dieses Material lagert sich dann auf der Oberseite des Schiebergehäuses 13 ab.

Hier sind die beiden Dichtungen 7,8 so vorgesehen, daß sie sich selbst schützen.

Nachdem nämlich der Schieberdeckel 3 immer nur mit dem Faßdeckel 4 zusammen verschoben wird, schützen die Dichtungen 7,8 die innen liegenden Flächen von Faßdeckel 4 und Schieberdeckel 3, so daß auch bei Beaufschlagung mit Material keine Kontamination erfolgt, wenn diese beiden Deckel 3,4 wieder in den Anschlußflansch 6 eingefahren werden.

Gemäß Figur 3 ist dargestellt, daß jede Dichtung 7,8 einen etwa C-förmigen Querschnitt aufweist und mit jeweils zwei im Winkel zueinander angeordneten Dichtschenkeln 20 in zugeordnete Nuten 9,12 an der jeweiligen Befestigungsstelle formschlüssig eingreift. Die beiden Dichtflächen 16,17 bzw. 14,15 bilden hierbei einen Winkel 22 zueinander.

Durch die C-förmige Ausbildung der Dichtungen 7,8 ergibt sich ein etwa pfeilförmiger Ansatz 19 als Befestigungsfläche, der mit seinen hinterschnittenen Nuten dafür sorgt, daß die Dichtung 7,8 nicht nach oben oder vorne herausgezogen werden kann. Gleichfalls bilden die Pfeilflächen dieses Ansatzes 19 relativ große Gegenflächen für die gegenüberliegende Dichtflächen 16,17, um so eine große und stabile Anlage für die Dichtflächen 16 und 17 zu bilden.

Als Werkstoffe für die vorher beschriebenen C-förmigen Dichtungen 7,8 werden folgende Materialien bevorzugt:

Silikon oder auch Verbundmaterialien aus Silikon und anderen Kunststoffen oder aus Silikon in Verbindung mit eingelegten Metallteilen.

Mit der erfindungsgemäßen Abdichtung wird erreicht, daß die Dichtungen zuverlässig befestigt sind und so mit hoher Lebensdauer optimal abdichten.

## Patentansprüche

1. Vorrichtung zum Befüllen oder Entleeren eines Fasses (10) mit flüssigen, pastösen oder pulverförmigen Medien, mit einem Schiebergehäuse (13) und einem Schieberdeckel (3), die Teil einer Einrichtung sind, an die das zu befüllende oder zu entleerende Faß angekoppelt ist, und die dabei mit einem Anschlußflansch (6) und einem Faßdeckel (4) des Fasses (10) verbunden sind um den Faßdeckel zusammen mit dem Schieberdeckel abzuheben, wobei die Innenräume des Fasses und des Schiebergehäuses in Verbindung gebracht werden, **gekennzeichnet durch** eine an der Unterseite des Schieberdeckels (3) angeordnete Ringdichtung (8), welche ein etwa C-förmiges Profil aufweist und zwei zueinander in einem Winkel (22) stehende Dichtflächen (14, 15) ausbildet, wobei die eine Dichtfläche (14) im wesentlichen gerade ausgebildet ist und an der Oberseite des Faßdeckels (4) anliegt, während die andere Dichtfläche (15) im wesentlichen konisch ausgebildet ist und an einer zugeordneten konischen Fläche des Schiebergehäuses (13) anliegt, wobei die Befestigung der Dichtung (8) am Schieberdeckel (3) über jeweils zwei Nuten (9, 12) und einen Ansatz (19) erfolgt, und wobei der Anschlußflansch (6) des Fasses (10) eine der Ringdichtung (8) entsprechende Ringdichtung (7) aufweist, deren gerade Dichtfläche (17) an der Unterseite des Schiebergehäuses (13) anliegt, wobei sich die Ringdichtungen (7, 8) nur im Bereich einer umlaufenden Berührungslinie (21) berühren.

2. Vorrichtung nach Anspruch 1, **dadurch gekennzeichnet,** daß beim Befüllen oder Entleeren des Fasses (10) die Dichtungen (7, 8) der jeweiligen Bauteile (3, 6) spiegelsymmetrisch zueinander und quer zur Längsachse des Fasses angeordnet sind.

3. Vorrichtung nach Anspruch 1 oder 2, **dadurch gekennzeichnet,** daß die am Schieberdeckel (3) angeordnete Dichtung (8) im Durchmesser kleiner ausgebildet ist, als die am Faßdeckel (4) angeordnete Dichtung (7).

4. Vorrichtung nach einem der Ansprüche 1 - 3, **dadurch gekennzeichnet,** daß der Schieberdeckel (3) eine Bohrung (24) zur Erzeugung eines Vakuums im Raum (24) zwischen dem Schieberdeckel (3) und dem Faßdeckel (4) aufweist.

5. Faß zur Verwendung mit der Vorrichtung nach einem der Ansprüche 1 - 4, welches mit flüssigen, pastösen oder pulverförmigen Medien befüllt oder entleert werden kann, mit einem an dessen Oberseite angeordneten Anschlußflansch (6) und einem Faßdeckel (4), wobei das Faß (10) zum Befüllen oder Entleeren an eine entsprechende Einrichtung ankoppelbar ist, **gekennzeichnet durch** eine am oberen Rand des Anschlußflansches (6) angeordnete, im Profil etwa C-förmige Dichtung (7), die zwei zueinander in einem Winkel (22) stehende Dichtflächen (16, 17) ausbildet, wobei die eine Dichtfläche (17) im wesentlichen gerade ausgebildet ist und an der Unterseite eines einen Teil der Einrichtung bildenden Schiebergehäuses (13) anlegbar ist, wahrend die andere Dichtfläche (16) im wesentlichen konisch ausgebildet ist und an einer entsprechenden konischen Fläche des Faßdeckels (4) anliegt, wobei die Befestigung der Dichtung (7)am Anschlußflansch über zwei Nuten (9, 12) und einen Ansatz (19) erfolgt, und der Faßdeckel (4) eine an der Innenseite des Anschlußflansches (6) anliegende O-Ringdichtung (5) aufweist.

6. Faß nach Anspruch 5, **dadurch gekennzeichnet,** daß ein Sicherungsdeckel (1) vorgesehen ist, der an der geraden Dichtfläche (17) anliegt und mittels eines Spannrings (2) auf dem Anschlußflansch (6) lösbar befestigt ist.

## Claims

1. A device for filling or emptying a barrel (10.) with, liquid, pasty or powdery media, with a slider housing (13) and with a slider cover (3), which are part of a device to which the barrel which is to be filled or emptied is ,coupled, and which in so doing are connected with a connecting flange (6) and with a barrel cover (4) of the barrel (10), in order to lift the barrel cover together with the slider cover, the interiors of the barrel and of the slider housing being brought into connection, characterised by a ring seal (8) arranged on the underside of the slider cover (3), which has an approximately C-shaped profile and forms two sealing surfaces (14, 15) at an angle (22) to each other, in which the one sealing surface (14) is constructed so as to be substantially straight and lies against the upper face of the barrel cover (4), whilst the other sealing surface (15) is constructed so as to be substantially conical and lies against an associated conical surface of the slider housing (13), the fastening of the seal (8) on the slider cover (3) taking place by means of two grooves (9, 12) respectively and a shoulder (19), and the connecting flange (6) of the barrel (10) having a ring seal (7) corresponding to the ring seal (8), the straight sealing surface (17) of which lies against the, underside of the slider housing (1.3), the ring seals (7, 8) only touching each other in the region of an encircling contact line (21).

2. The device according to Claim 1, characterised in that the filling or emptying the barrel (10), the seals (7, 8) of the respective components (3, 6) are arranged in mirror symmetry to each other and are arranged transversely to the longitudinal axis of the barrel.

3. The device according to Claim 1 or 2, characterised in that the seal (8) arranged on the slider cover (3) is constructed so as to be smaller in diameter than the seal (7) arranged on the barrel cover (4).

4. The device according to one of Claims 1 - 3, characterised in that the slider cover (3) has a bore (24) for the production of a vacuum in the space (24) between the slider cover (3) and the barrel cover (4).

5. A barrel for use with the device according to one of Claims 1 - 4, which can be filled with liquid, pasty or powdery media or emptied, with a connecting flange (6) arranged on its tipper face and with a barrel cover (4), the barrel (10) being able to be coupled to a corresponding device for filling or emptying, characterised by a seal (7), approximately C-shaped in profile, arranged on the upper rim of the connecting flange (6), which seal (7) forms two sealing surfaces (16, 17) at an angle (22) to each other, the one sealing surface (17) being constructed so as to be substantially straight and being able to be placed against the underside of a slider housing (13) forming a part of the device, whilst the other sealing surface (16) is constructed so as to be substantially conical and lies against a corresponding conical surface of lies barrel cover (4), the fastening of the seal (7) on the connecting flange taking place by means of two grooves (9, 12) and a shoulder (19), and the barrel cover (4) having an O-ring seal (5) lying against the inner side of the connecting flange (6).

6. The barrel according to Claim 5, characterised in that a safety cover (1) is provided which lies against the straight sealing surface (17) and is detachably fastened by means of a clamping ring (2) on the connecting flange (6).

## Revendications

1. Dispositif pour remplir ou vider un réservoir (10) avec des produits liquides, pâteux ou pulvérulents, comportant une enveloppe de robinet-vanne (13) et un couvercle de robinet-vanne (3) qui font partie d'une installation à laquelle le réservoir à remplir ou à vider est accouplé, et qui sont reliés à une bride de raccordement (6) et à un couvercle (4) du réservoir (10) afin de soulever le couvercle de réservoir en même temps que le couvercle de robinet-vanne, les espaces intérieurs du réservoir et de l'enveloppe de robinet-vanne étant reliés, **caractérisé** par une bague d'étanchéité (8) qui est disposée sur le côté inférieur du couvercle de robinet-vanne (3), qui présente un profil à peu près en forme de C et qui forme deux surfaces d'étanchéité (14, 15) définissant un angle (22), la première surface d'étanchéité (14) étant globalement droite et étant appliquée contre le côté supérieur du couvercle de réservoir (4) tandis que la seconde surface d'étanchéité (15) est globalement conique et est appliquée contre une surface conique correspondante de l'enveloppe de robinet-vanne (13), étant précisé que la fixation du joint d'étanchéité (8) au couvercle de robinet-vanne (3) se fait grâce à deux rainures (9, 12) et à une saillie (19), que la bride de raccordement (6) du réservoir (10) comporte une bague d'étanchéité (7) qui correspond à la bague d'étanchéité (8) et dont la surface d'étanchéité droite (17) est appliquée contre le côté inférieur de l'enveloppe de robinet-vanne (13), et enfin que les bagues d'étanchéité (7, 8) ne se touchent que dans la zone d'une ligne de contact circulaire (21).

2. Dispositif selon la revendication 1, **caractérisé** en ce que lors du remplissage ou de l'évacuation du récipient (10), les joints d'étanchéité (7, 8) des éléments correspondants (3, 6) sont disposés de façon symétrique et inversée, et transversalement par rapport à l'axe longitudinal du réservoir.

3. Dispositif selon la revendication 1 ou 2, **caractérisé** en ce que le joint d'étanchéité (8) disposé sur le couvercle de robinet-vanne (3) a un diamètre inférieur à celui du joint d'étanchéité (7) disposé sur le couvercle de réservoir (4).

4. Dispositif selon l'une des revendications 1 à 3, **caractérisé** en ce que le couvercle de robinet-vanne (3) présente un perçage (24) pour générer un vide dans l'espace (24) situé entre le couvercle de robinet-vanne (3) et le couvercle de réservoir (4).

5. Réservoir à utiliser avec le dispositif selon l'une des revendications 1 à 4, qui peut être rempli ou vidé avec des produits liquides, pâteux ou pulvérulents, comportant une bride de raccordement (6), sur son côté supérieur, et un couvercle de réservoir (4), le réservoir (10) étant apte à être accouplé, pour être rempli ou vidé, à une installation appropriée, **caractérisé** par un joint d'étanchéité (7) à profil à peu près en forme de C qui est disposé sur le bord supérieur de la bride de raccordement (6) et qui forme deux surfaces d'étanchéité (16, 17) formant un angle (22), la première surface d'étanchéité (17) étant globalement droite et étant apte à être appliquée contre le côté inférieur d'un couvercle de robinet-vanne (13) qui forme une partie de l'installation tandis que la seconde surface d'étanchéité (15) est globalement conique et est appliquée contre une surface conique correspondante du couvercle de réservoir (4), étant précisé que la fixation du joint d'étanchéité (7) à la bride de raccordement (6) se fait grâce à deux rainures (9, 12) et à une saillie (19), que le couvercle de réservoir (4) comporte un joint torique d'étanchéité (5) qui est appliqué contre le côté intérieur de la bride de raccordement (6).

6. Réservoir selon la revendication 5**, caractérisé** en ce qu'il est prévu un couvercle de sécurité (1) qui est appliqué contre la surface d'étanchéité droite (17) et fixé de façon amovible sur la bride de raccordement (6) à l'aide d'une bague de serrage (2).
